# EUROPÄISCHE PATENTSCHRIFT

(11) **EP 0 475 135 B1**
(45) Veröffentlichungstag und Bekanntmachung des Hinweises auf die Patenterteilung: **12.03.1997**
(21) Anmeldenummer: 91113918.6
(22) Anmeldetag: 20.08.1991
(51) Int. Cl.: H04L 12/42, H04M 9/02

(54) **Übertragungssystem für Zubringernetze in Kommunikationsnetzen**
Transmission system for connection network in communication networks
Système de transmission pour réseau de connection dans des reseaux de communication

(30) Priorität: 29.08.1990 ZA 906886
(43) Veröffentlichungstag der Anmeldung: 18.03.1992
(73) Patentinhaber: SIEMENS AKTIENGESELLSCHAFT, 80333 München (DE)
(72) Erfinder: Kinnear, Kevin Garth, Faerie Glen, Pretoria 0043 (ZA)

(56) Entgegenhaltungen:
- EP-A- 0 086 577
- EP-A- 0 303 093
- GLOBAL TELECOMMUNICATIONS CONFERENCE 1987 Bd. 3, November 1987, TOKYO, JP Seiten 1449 - 1454; N. FUJIMOTO ET AL: 'Broadband Subscriber Loop System Using Multi-Gigabit Intelligent Optical Shuttle Nodes'

## Beschreibung

In Kommunikationssystemen - insbesondere öffentlichen Kommunikationssystemen, wie z. B. im Fernsprechnetz - werden überwiegend digitale, rechnergesteuerte Vermittlungseinrichtungen eingesetzt. Diese größeren Vermittlungseinrichtungen sind mit einem speziellen Vermittlungsrechner ausgestattet, der meist direkt mit einer Koppelfeldeinrichtung und, um den Vermittlungsrechner dynamisch zu entlasten, über eine oder mehrere Kommunikationsuntersteuerungen mit mehreren Teilnehmeranschlußeinrichtungen kommuniziert. Die zu vermittelnden Informationskanäle, z. B. Fernsprechkanäle, werden zwischen der Koppelfeldeinrichtung und der Teilnehmeranschlußeinrichtung bevorzugt über zeitschlitzorientierte PCM (pulscodemodulierte)-Verbindungen - beispielsweise mit einer Datenrate von 2,048 MBit/s-geführt. Die Teilnehmeranschlußeinrichtungen weisen entweder einzelne Teilnehmeranschlüsse, d. h. für jeden Teilnehmer ein separater Anschluß, auf oder sind beispielsweise mit einem zeitschlitzorientierten PCM-Anschluß mit einer Datenrate von 2.048 MBit/s ausgestattet. An diese 2,048 MBit/s-Anschlüsse können einzelne Teilnehmer, maximal 30, über Multiplexeinrichtungen und PCM-Übertragungstechnik herangeführt werden. Ein derartiges Vermittlungssystem stellt beispielsweise das Digitalvermittlungssystem EWSD der Firma Siemens dar und ist aus dem Beiheft des Siemens Telcom Report (1981), "Digitalvermittlungssystem EWSD", insbesondere Seiten 66 bis 68, bekannt.

Des weiteren ist aus einer europäischen Veröffentlichungsschrift 0 303 093 ein Kommunikationssystem bekannt, bei dem im Teilnehmeranschlußbereich einer Vermittlungseinrichtung ein als Zubringernetz vorgesehenes ringförmiges Netz eingefügt ist. Hierbei sind vermittlungsanschlußseitig und teilnehmereinrichtungsseitig jeweils Anpassungseinrichtungen vorgesehen, mit deren Hilfe die zu übermittelnden Informationen, insbesondere die Signalisierungsinformationen, derart aufbereitet werden, daß diese über Ringnetzzugriffseinrichtungen und das Ringnetz übertragen werden können. Innerhalb des Ringnetzes werden die Nachrichten, d. h. die digitalisierten Fernsprechinformationen, mit Hilfe zeitschlitzorientierter Informationen und die Signalisierungsinformationen mit Hilfe von paketorientierten Informationen übermittelt. In beiden Fällen führen Störungen der Übertragungsmedien oder der Ringnetzzugriffseinrichtungen zum Totalausfall des Zubringernetzes einschließlich der angeschlossenen Teilnehmerendgeräte.

Des weiteren werden gemäß dem US-Patent 3,876,983 redundante Übertragungsstrecken in einem Ringnetz eingesetzt und im Stand-by-Mode betrieben werden. Dies bedeutet unter Berücksichtigung der Überwachung und Wartung derartiger redundanter Einrichtungen und insbesondere im Hinblick bei Einsatz derartiger redundanter Einrichtungen in größeren Kommunikationsnetzen eine erhebliche Aufwandssteigerung.

Die der Erfindung zugrundeliegende Aufgabe besteht darin, ein Übertragungssystem auszugestalten, das als Zubringernetz für Kommunikationsnetze geeignet ist und bei dem bei Störungen der Übertragungsmedien und/oder Übertragungseinrichtungen ein Totalausfall des Übertragungssystems bzw. des Zubringernetzes vermieden wird.

Der wesentliche Aspekt des erfindungsgemäßen Übertragungssystems ist darin zu sehen, daß für den Anschluß an eine Vermittlungseinrichtung eine Vermittlungsanschlußeinrichtung sowie für den Anschluß abgesetzter, das heißt weit entfernter Teilnehmer spezielle abgesetzte Stationen vorgesehen sind und diese üblicherweise über zwei parallel verlaufende Verbindungen miteinander verbunden sind. Bei Anschluß von wenigen Teilnehmern an eine abgesetzte Station kann eine Verbindung über eine vorhandene Sende- und Empfangseinrichtung angeschlossen werden und die zweite Verbindung durch die Station geschleift werden. Einerseits ist hierbei ein rekonfigurieren mit Hilfe der Schalteinrichtung nicht möglich, jedoch aufgrund der geringeren Anzahl von angeschlossenen Teilnehmern auch nicht erforderlich; andererseits kann jeweils auf eine aufwendige Empfangs- sowie Sendeeinrichtung - insbesondere optische Sende- und Empfangseinrichtungen - verzichtet werden. Des weiteren kann nach einem Detektieren von Störungen in einem der Komponenten des Übertragungssystems mit Hilfe von in der Vermittlungsanschlußeinrichtung und in den abgesetzten Stationen angeordneter Schaltmittel und Steuereinrichtungen aus der noch intakten Ringnetzteile des gefalteten Ringnetzes konfiguriert werden. Besonders vorteilhaft sind die Leitungen durch eine optische Leitung und die Sende- und Empfangseinrichtungen durch optische Sende- und Empfangseinrichtungen realisiert - Anspruch 2.

Ein wesentlicher Vorteil des erfindungsgemäßen Übertragungssystems ist darin zu sehen, daß durch Einsatz optischer Übertragungseinrichtungen weiträumige Zubringenetze für großflächige Kommunikationsnetze gebildet werden können und andererseits bei höchstmöglicher Übertragungssicherheit durch das gefaltete Ringnetz hinsichtlich Aufwand im Übertragungssystem eine maximale Anpassung an den Ausbaugrad der abgesetzten Stationen und der damit verbundenen Ausfallbreite von Teilnehmereinrichtungen erreicht wird.

In jeder abgesetzten Station ist im Sinne einer beidseitigen Erkennung von Leitungs- und Übertragungskomponentenfehlern eine Fehlererkennungseinrichtung und ein von einer Stationssteuerung gesteuertes Schaltmittel vorgesehen, mit dessen Hilfe bei gestörter abgesetzter Station die optischen Leitungen übermittlungsrichtungskonform ohne Unterbrechung durchgeschaltet werden oder mit dessen Hilfe nach detektierter Störung der optischen Leitung oder der optischen Übertragungseinrichtungen der von der abgesetzten Station übermittelte Informationsstrom an die nicht übermittlungsrichtungskonforme, in Richtung Vermittlungsanschlußeinrichtung wirkende, optische Leitung gesteuert wird. In der Vermittlungsanschlußeinrichtung wird mit Hilfe einer zentralen Steuerung und eines Schaltmittels nach einem Erkennen einer durch ein Schaltmittel in den abgesetzten Stationen gebildeten Informationsschleife der an der weiteren optischen Leitung ankommende Informationsstrom an die andere optische Leitung gesteuert und die abgesetzten Stationen im Sinne eines Vorhandenseins überprüft sowie die noch intakten Teile des gefalteten Ringnetzes zu einem neuen gefalteten Ringnetz konfiguriert und das gefaltete, konfigurierte Ringnetz wieder in Betrieb genommen - Anspruch 3. Mit Hilfe der Steuerungen und der Schaltmittel kann in den abgesetzten Stationen die optische Leitung bei Störung der Station durchgeschleift, d. h. in den By-Pass-Zustand gesteuert werden oder bei Störung einer der Übertragungssystemkomponenten der Informationsstrom zurück zur Vermittlungsanschlußeinrichtung gesteuert werden. Des weiteren wird in der Vermittlungsanschlußeinrichtung nach einem Erkennen einer Informationsschleife in einem der abgesetzten Stationen die für das Bilden eines gefalteten Ringnetzes verantwortliche Informationsschleife im Sinne des Bildens eines konfigurierten gefalteten Ringnetzes umgesteuert.

Besonders vorteilhaft wird die Vermittlungsanschlußeinrichtung vermittlungseinrichtungsseitig durch zeitschlitzorientierte 2,048 MBit/s-Schnittstelleneinrichtungen mit einer nachgeschalteten Multiplexeinrichtung sowie einer Schalteinrichtung, die zumindest mit einer optischen Sende- und einer optischen Empfangseinrichtung verbunden ist, ausgestattet - Anspruch 4. Durch diese Einrichtungskombination werden die von der Vermittlungseinrichtung übermittelten Datenströme von 2 MBit/s in beispielsweise Datenströme von 18 MBit/s umgesetzt, das heißt gemultiplext bzw. demultiplext, und mit Hilfe der optischen Sende- und Empfangseinrichtungen sowie der optischen Leitungen an die abgesetzten Stationen übermittelt.

Gemäß einer vorteilhaften Ausgestaltung der Erfindung ist in jeder abgesetzten Station eine eingangsseitig kanalindividuelle Einrichtungen aufweisende Multiplexeinrichtung und eine mit dieser über jeweils eine Empfangs-, Daten-, Taktsynchronisationsleitung sowie eine fehleranzeigende Leitung verbundene Schalteinrichtung angeordnet, wobei die Schalteinrichtung mit zumindest jeweils einer optischen Empfangs- und Sendeeinrichtung in Verbindung steht - Anspruch 5. Durch diese Anordnung der Einrichtungen werden die kanalindividuellen Informationen - d. h. die Informationen, die von einer Endeinrichtung - z. B. Telefonen - übermittelt werden, einschließlich der Signalisierungsinformationen - beispielsweise zu einem Informationsstrom von 18 MBit/s umgesetzt, d. h. gemultiplext und bei entgegengesetzter Übermittlung demultiplext und mit Hilfe der optischen Sende- und Empfangseinrichtungen an die optischen Leitungen übermittelt bzw. von diesen empfangen.

Die Schalteinrichtung ist besonders vorteilhaft durch zwei Datenselektor/Multiplex-Schaltkreise sowie zweier Logik-Schaltkreise realisierbar - Anspruch 6. Hierbei werden die Ausgänge der optischen Empfangseinrichtungen und die Eingänge der optischen Sendeeinrichtungen sowie der Ausgang und der Eingang der Multiplexeinrichtung derart mit den Eingängen des beiden Datenselektor/Multiplex-Schaltkreises verbunden, daß durch angeordnete Steuereingänge eine ankommende optische Leitung mit der zugeordneten Multiplexeinrichtung und die zur ankommenden optischen Leitung übermittlungsrichtungskonforme optische Leitung mit der Multiplexeinrichtung verbindbar ist oder nach Erkennen eines Stationsfehlers jeweils die ankommende optische Leitung übermittlungsrichtungskonform mit der abgehenden optischen Leitung verbindbar ist oder nach dem Erkennen eines Leitungs- oder Übertragungskomponentenfehlers die Multiplexeinrichtung mit der anderen nicht übermittlungsrichtungskonformen optischen Leitung verbindbar ist. An die Eingänge der beiden Logik-Schaltkreise, z. B. logische NAND-Verknüpfungsglieder, können Stations- oder Leitungsfehler repräsentierende Spannungspotentiale gesteuert werden. Durch die logische Verknüpfung können bei Auftreten eines oder mehrerer Fehler die Schalteinrichtung aktiviert, d. h. die Umsteuerung des Informationsstromes bewirkt bzw. die Leitungsschleife aktiviert werden.

Nach einer weiteren vorteilhaften Ausgestaltung der Erfindung ist die Multiplexeinrichtung der Vermittlungsanschlußeinrichtung derart ausgestaltet, daß zeitschlitzorientierte, kanalgebündelte Informationsströme von 2 MBit/s zu einem Datenstrom bzw. Nachrichtenfluß von 18 MBit/s gemultiplext bzw. demultiplext werden - Anspruch 7. Diese Übertragungsgeschwindigkeit stellt einen vorteilhaften Kompromiß zwischen Aufwand für die Multiplexeinrichtungen und der zu übermittelnden Informationsmenge dar. Sind größere Informationsmengen zu übermitteln, kann aufgrund des Einsatzes der optischen Übertragungstechnik die Datenübermittlungsgeschwindigkeit jederzeit erhöht werden. Zu beachten ist hierbei jedoch, daß die die Verarbeitungsgeschwindigkeit der in den Stationen eingesetzten elektrischen Komponenten nicht überschritten wird. Analog hierzu ist in den abgesetzten Einrichtungen eine Multiplexeinrichtung derart ausgestaltet,daß die zeitschlitz- bzw. kanalorientierten richtenströme von 64 KBit/s einschließlich der Signalisierungsinformationen zu einem Datenstrom bzw. Nachrichtenfluß von 18 MBit/s gemultiplext bzw. demultiplext werden - Anspruch 8. Die in den abgesetzten Stationen verwendeten Multiplexeinrichtungen weisen eine zusätzliche Bündelungsstufe auf - von einem Fernsprechkanal von 64 KBit/s auf 2,048 MBit/s -, deren Realisierung beispielsweise durch insbesondere in den öffentlichen Fernsprechnetzen eingesetzten Multiplexeinrichtungen von 2,048 MBit/s erfolgen kann.

Die den Multiplexeinrichtungen vorgeschalteten Kanaleinrichtungen sind je nach vorhandener Anschlußtechnik bzw. Endgerät durch einen analogen Fernsprechanschluß oder durch einen digitalen Fernsprechanschluß mit zumindest einem Nachrichtenkanal von 64 KBit/s realisierbar - Anspruch 9. In der Kanaleinrichtung sind bei einem analogen Fernsprechanschluß Mittel für die Umsetzung in digitalen Informationen sowie Mittel zur gnalisierungsbehandlung und Einfügen der gebildeten Signalisierungsinformationen in einen Signalisierungskanal anzuordnen. Bei einem digitalen Fernsprechanschluß sind die übertragungstechnischen Einrichtungen für beispielsweise ein Echokompensationsverfahren oder ein Zeitlage-Getrennt-Verfahren zu implementieren.

Nach einer weiteren vorteilhaften Ausgestaltung der Erfindung ist die Vermittlungseinrichtung derart ausgestaltet, daß nach einem Erkennen einer durch eine abgesetzte Station gebildeten Informationsschleife mit Hilfe der zentralen Steuereinrichtung sowie der Schalteinrichtung und der optischen Sende- und Empfangseinrichtungen im Sinne einer Vorhandenseinsprüfung Meldungen gebildet und an alle abgesetzten Stationen übermittelt werden und daß entsprechend dem Empfang von in den abgesetzten Stationen als Vorhandenseinsinformationen gebildete Quittierungsinformationen das gefaltete Ringnetz durch Absenden von Konfigurationsmeldungen, die in den abgesetzten Stationen die Schalteinrichtungen beeinflussen, ein konfiguriertes gefaltetes Ringnetz gebildet und in Betrieb genommen wird - Anspruch 10. Die Informationsschleife wird hierbei dadurch erkannt, daß von der Vermittlungsanschlußeinrichtung ausgesandte Informationen über eine andere optische Leitung als im Normalbetrieb empfangen werden. Die ausgesandten Meldungen werden hierbei an die in den abgesetzten Stationen implementierten Stationsrechner übermittelt und in diesen bewertet sowie das Aussenden von Quittierungsinformationen veranlaßt. Aufgrund der empfangenen Quittierungsinformationen, die nur noch über die intakten optischen Leitungen bzw. abgesetzten Stationen übermittelt werden können, werden Konfigurationsinformationen gebildet und gezielt an die betroffenen abgesetzten Stationen übermittelt. Dort wird anschließend die entsprechende Informationsschleife gesteuert.

Gemäß einer weiteren vorteilhaften Ausgestaltung der Erfindung sind die abgesetzten Stationen hinsichtlich des Empfangs und des Sendens von Informationen mit Hilfe der Stationssteuereinrichtung und der Schalteinrichtung abwechselnd in die erste und zweite Leitung eingefügt - Anspruch 11. Hierdurch wird eine gleichmäßige Verteilung der abgesetzten Stationen auf die beiden Leitungen und damit im gefalteten Ringnetz bewirkt.

Im folgenden wird die Erfindung anhand zweier Blockschaltbilder näher erläutert. Dabei zeigen
- FIG 1: das Übertragungssystem als Zubringernetz in einem weiträumigen Kommunikationssystem, und
- FIG 2: das Schaltbild einer in den abgesetzten Stationen bzw. der Vermittlungsanschlußeinrichtung implementierten Schalteinrichtung.

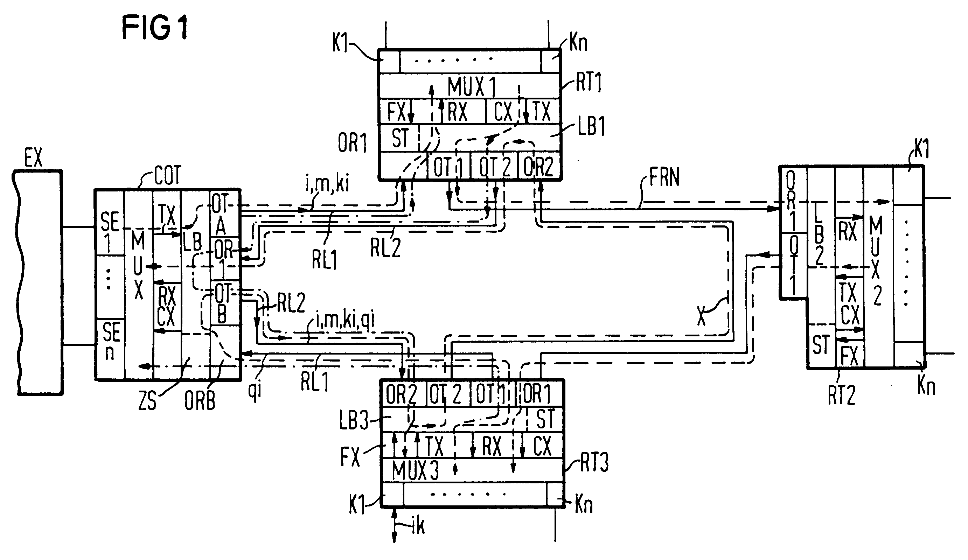

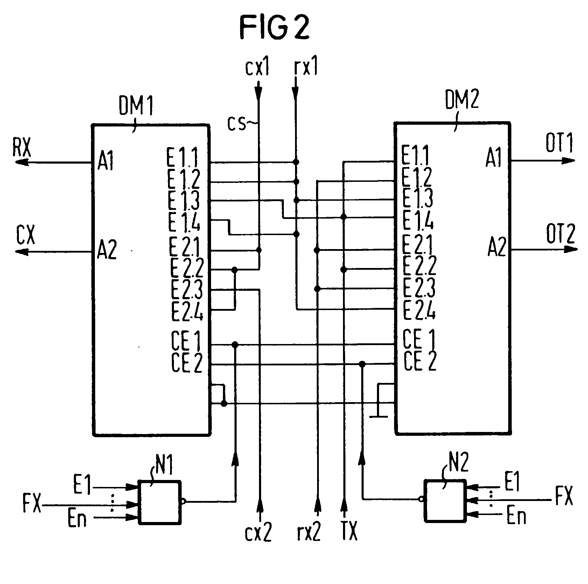

FIG 1 zeigt in einem Blockschaltbild ein gefaltetes Ringnetz FRN, an das eine Vermittlungsanschlußeinrichtung COT sowie drei abgesetzte Stationen RT1...RT3 angeschlossen sind. Das gefaltete Ringnetz FRN ist durch zwei optische Leitungen RL1, RL2 gebildet. Die optischen Leitungen RL1, RL2 sind beispielsweise durch Lichtwellenleiter - z. B. optische Glasfasern - realisiert. Die Vermittlungsanschlußeinrichtung COT ist eingangsseitig beispielsweise mit einer Fernsprechvermittlung EX verbunden. Hierfür sind sowohl in der Vermittlungsanschlußeinrichtung COT als auch in der Fernsprechvermittlung EX standardisierte 2 MBit/s-Schnittstellen entsprechend den CCITT-Empfehlungen G.903 vorgesehen. Diese standardisierten 2,048 MBit/s-Schnittstellen sind in der Netzanschlußeinrichtung COT durch Schnittstelleneinrichtungen SEl...SEn realisiert. Die 2,048 MBit/s-Schnittstellen sind üblicherweise für die Übermittlung von 30 Fernsprechkanälen vorgesehen, wobei in einem zusätzlichen Kanal die den vermittlungstechnischen Zustand anzeigenden und steuernden Informationen, d. h. Signalisierungsinformationen, für jeden Kanal enthalten sind. Die 2,048 MBit/s-Bitströme - beispielsweise neun - werden in einer nachgeschalteten Multiplexeinrichtung MUX nacheinander zyklisch abgetastet und zu einem seriellen Bitstrom von 18 MBit/s zusammengefaßt. In der Multiplexeinrichtung MUX werden analog zur Multiplexierung die ankommenden 18 MBit/s-Informationen hinsichtlich Nachrichten- und Signalisierungskanal in einzelne 2,048 MBit/s-Datenströme aufgeteilt, d. h. demultiplext. Die Multiplexeinrichtung MUX ist über eine Sendeleitung TX, eine Empfangsleitung RX und eine Taktleitung CX mit einer Schalteinrichtung LB verbunden. Mit Hilfe der in FIG 2 näher erläuterten Schalteinrichtung LB wird der von der Multiplexeinrichtung MUX übermittelte Datenstrom an eine mit der ersten optischen Ringleitung RL verbundene, erste optische Sendeeinrichtung OT1 geschaltet. Die erste Ringleitung RL1 ist an eine erste optische Empfangseinrichtung OR1 der ersten abgesetzten Station RT1, von dieser durch eine erste optische Sendeeinrichtung OT1 zu einer ersten optischen Empfangseinrichtung OR1 der zweiten abgesetzten Station RT2, von dieser durch eine erste optische Sendeeinrichtung OT1 zu einer ersten optischen Empfangseinrichtung OR2 der dritten abgesetzten Station RT3 und von dieser durch eine erste optische Sendeeinrichtung OT1 zu einer zweiten optischen Empfangseinrichtung ORB der Vermittlungsanschlußeinrichtung COT geführt. Analog hierzu ist die zweite optische Ringleitung RL2 von der zweiten optischen Sendeeinrichtung OTB der Vermittlungsanschlußeinrichtung COT zu einer zweiten optischen Empfangseinrichtung OR2 der dritten abgesetzten Station RT3, von dieser durch eine zweite optische Sendeeinrichtung OT2 an eine zweite optische Empfangseinrichtung OR2 der ersten abgesetzten Station RT1 und von dieser durch eine zweite optische Sendeeinrichtung OT2 zu einer ersten optischen Empfangseinrichtung ORA der Vermittlungsanschlußeinrichtung COT geführt. Für das Ausführungsbeispiel sei angenommen, daß die zweite optische Ringleitung RL2 in der zweiten abgesetzten Station RT2 nicht angeschlossen ist, sondern durchgeschleift wird. Dieses Durchschleifen ist dann sinnvoll, wenn nur wenige Teilnehmer an diese abgesetzte Station RT2 angeschlossen sind. Aufgrund dieses Durchschleifens kann in dieser abgesetzten Station RT2 keine Leitungsschleife gebildet und diese somit bei Auftreten eines Fehlers oder einer Unterbrechung nicht mehr in ein konfiguriertes gefaltetes Ringnetz einbezogen werden.

Die Ausgänge bzw. die Eingänge der ersten und der zweiten optischen Sende- bzw. Empfangseinrichtungen OR1, OR2, OT1, OT2 sind in jeder der abgesetzten Stationen RT1...RT3 mit einer vermittlungsanschlußeinrichtungsgemäß realisierten Schalteinrichtung LB1...LB3 verbunden. Um den Aufwand zu reduzieren, kann die Umschalteeinrichtung LB2 in der zweiten abgesetzten Station RT2 entfallen. Analog zur Realisierung in der Vermittlungsanschlußeinrichtung COT sind die Schalteinrichtungen LB1...LB3 über eine Sendeleitung TX, eine Empfangsleitung RX, eine Taktleitung CX sowie fehleranzeigende Leitungen FX mit den nachfolgenden Multiplexeinrichtungen MUX1...MUX3 verbunden. Mit Hilfe dieser Multiplexeinrichtungen MUX werden die ankommenden Informationsströme i parallel in die einzelnen Kanäle, d. h. Teilnehmeranschlüsse, aufgeteilt. Dies bedeutet, daß ein ankommender 18 MBit/s-Strom in Einzelkanäle von 64 KBit/s aufgeteilt wird. Die in einem Signalisierungskanal zusammengefaßte Signalisierungsinformation wird mit Hilfe der Multiplexeinrichtungen MUX1...MUX3, der Stationssteuerungen ST und der Kanaleinrichtungen Kl...Kn für jeden Teilnehmeranschluß aufbereitet. Hierbei kann die Signalisierungsbehandlung in der Stationssteuerung ST beispielsweise durch einen Kommunikationsbaustein 82520 der Firma Siemens (High speed communication controller, HSCC) durchgeführt werden. Mit Hilfe dieses Bausteins kann auch der gemultiplexte Bitstrom von 18 MBit/s überwacht und gesteuert werden. Dieser Kommunikationsbaustein unterstützt Schicht 1- und Schicht 2-Funktionen des OSI-Referenzmodells in Zusammenarbeit mit dem LAPB-Protokoll gemäß der CCITT-Empfehlung X.25. Der 'User Part' ist auf das erfindungsgemäße Übertragungssystem abgestimmt. Die Kanaleinrichtungen Kl...Kn können beispielsweise durch digitale oder analoge Teilnehmeranschlüsse realisierende Leitungsanschlußeinrichtungen bekannter Vermittlungssysteme, z. B. dem eingangs erwähnten Vermittlungssystem der Firma Siemens, EWSD, realisiert sein.

Eine Verringerung des Aufwandes in den Multiplexeinrichtungen MUX1...MUX3 der abgesetzten Stationen RT1...RT3 kann beispielsweise dadurch erfolgen, daß jeder abgesetzten Station RT1...RT3 nur ein vorgegebener Teil des Datenstromes - z. B. 2,048 MBit/s - zugeordnet ist. Folglich ist aus dem Bitstrom von 18 MBit/s lediglich ein Teildatenstrom von 2 MBit/s zu multiplexieren bzw. zu demultiplexieren.

In FIG 1 ist der Informationsfluß bei Normalbetrieb durch strichlierte Linien und der Informationsfluß nach einer Unterbrechung an einer durch ein "x" bestimmten Stelle durch strichpunktierte Linien dargestellt. Für die Steuerung jeweils aller Komponenten ist in der Vermittlungsanschlußeinrichtung COT eine zentrale Steuerung ZS und in den abgesetzten Stationen LB1...LB3 jeweils eine Stationssteuerung ST vorgesehen. Mit Hilfe dieser Steuerungen ZS, ST werden des weiteren sowohl die im Normalbetrieb das Übertragungssystem ständig überwachenden Informationen über das gefaltete Ringnetz FRN als auch die nach Störungen auszusendenden Meldungen m und Quittierungsinformationen qi gebildet, bewertet und anschließend entsprechende Konfigurationsinformationen ki an die betroffenen abgesetzten Stationen RT1...RT3 übermittelt.

FIG 2 zeigt das Blockschaltbild der in der Vermittlungsanschlußeinrichtung COT und in den abgesetzten Stationen RT1...RT3 angeordneten Schalteinrichtung LB. Die Schalteinrichtung LB ist im wesentlichen durch zwei Datenselektor/Multiplex-Schaltkreise DM1, DM2 sowie durch zwei logischen NAND-Verknüpfungsgliedern N1, N2 realisiert. Zwei derartige Datenselektor/Multiplex-Schaltkreise sind beispielsweise in dem integrierten Schaltkreis 74HC153 der Firma Siemens enthalten. Es handelt sich hierbei um einen handelsüblichen integrierten Schaltkreis der schnellen CMOS-Technik-Standardserie. Analog hierzu sind die beiden NAND-Verknüpfungsglieder N1, N2 durch einen integrierten Schaltkreis 74HC30 - enthält beide NAND-Verknüpfungsglieder N1, N2 - der Firma Siemens realisierbar. Jeder der Datenselektor/Multiplex-Schaltkreise DM1, DM2 weist vier erste Eingänge E1.1...E1.4 und einen zugeordneten ersten Ausgang Al sowie vier zweite Eingänge E2.1...E2.4 und einen zugeordneten zweiter Ausgang A2 auf. Durch entsprechendes Anlegen von Spannungspotentialen an jeweils zwei Steuereingängen CE1, CE2 des ersten und zweiten Datenselektor/Multiplex Schaltkreises DM1, DM2 wird eines an einem der vier Eingänge E anliegenden analogen Signale an den zugehörigen Ausgang A gesteuert.

Die von jeweils der ersten optischen Empfangseinrichtung OR1 gebildeten Taktsignale cxl werden über eine entsprechende Verbindung an den ersten, zweiten und vierten Eingang der zweiten Eingänge E2.1, E2.2, E2.4 geführt. Analog hierzu gelangen die jeweils in der zweiten optischen Empfangseinrichtung OR2 gebildeten Taktsignale cx2 über eine entsprechende Verbindung an den dritten Eingang der zweiten Eingänge E2.3 des ersten Datenselektor/Multiplex-Schaltkreises DM1. Die in der ersten optischen Empfangseinrichtung OR1 empfangenen Signale rxl werden an den ersten, zweiten und vierten Eingang der ersten Eingänge E1.1, E1.2, E1.4 des ersten Datenselektor/Multiplex-Schaltkreises DM1 sowie an den dritten Eingang der ersten Eingänge E1.3 und den vierten Eingang der zweiten Eingänge E2.4 des zweiten Datenselektor/Multiplex-Schaltkreises DM2 geführt.

Analog hierzu gelangen die in der zweiten optischen Empfangseinrichtung OR2 empfangenen Signale rx2 an den zweiten Eingang der ersten Eingänge E1.2 sowie an den ersten und dritten Eingang der zweiten Eingänge E2.1, E2.3 des zweiten Datenselektor/Multiplex-Schaltkreises DM2. Des weiteren ist der erste Ausgang Al bzw. zweite Ausgang A2 des zweiten Datenselektor/Multiplex-Schaltkreises DM2 mit der ersten bzw. zweiten optischen Sendeeinrichtung OT1, OT2 verbunden. Die von der Multiplexeinrichtung MUX herangeführte Verbindung TX ist an den ersten und vierten Eingang der ersten Eingänge E1.1, E1.4 sowie den dritten Eingang der zweiten Eingänge E2.3 des zweiten Datenselektor/Multiplex-Schaltkreises DM2 sowie mit dem dritten Eingang der ersten Eingänge E1.3 des ersten Datenselektor/Multiplex-Schaltkreises DM1 geschaltet. Der erste Ausgang bzw. der zweite Ausgang A1, A2 des ersten Datenselektor/Multiplex-Schaltkreises DM1 ist mit der Empfangsleitung RX bzw. der Taktleitung CX der Multiplexeinrichtung MUX verbunden.

Des weiteren ist der Ausgang des ersten NAND-Verknüpfungsgliedes N1 mit jeweils einem ersten Steuereingang CE1 der beiden Datenselektor-Multiplex-Schaltkreise DM1, DM2 und der Ausgang des zweiten NAND-Verknüpfungsgliedes N2 mit jeweils beiden Steuereingängen CE2 verbunden.

Die Eingänge El...En des ersten und zweiten NAND-Verknüpfungsgliedes N2, N1 sind mit den fehleranzeigenden Einrichtungen bzw. Komponenten der Vermittlungsanschlußeinrichtung COT oder der abgesetzten Stationen RT1...RT3, z. B. mit der fehleranzeigenden Leitung FX der Multiplexeinrichtung MUX, verbunden. Entsprechend der auftretenden Fehler werden an die Eingänge El...En Spannungspotentiale gesteuert und in Abhängigkeit von den logischen NAND-Verknüpfungsfunktionen die Datenselektor/Multiplex-Schaltkreise DM1, DM2 gesteuert.

Dabei werden in Abhängigkeit von logischen Informationen an den beiden Steuereingängen CE1, CE2 folgende Steuerungen durch die Datenselektor/Multiplex-Schaltkreise vorgenommen:
- logische '0'-Information am ersten und zweiten Steuereingang CE1, CE2 bewirken Normalbetrieb,
- logische '1'-Information am ersten Steuereingang CE1 und logische '0'-Information am zweiten Steuereingang CE2 bewirkt eine Leitungsschleife von der ersten optischen Empfangseinrichtung OR1 zur zweiten optischen Sendeeinrichtung OT2,
- logische '0'-Information am ersten Steuereingang CE1 und logische '1'-Information am zweiten Steuereingang CE2 bewirkt eine Leitungsschleife von der zweiten optischen Empfangseinrichtung OR2 zur ersten optischen Sendeeinrichtung OR1, und
- logische '1'-Information am ersten und zweiten Steuereingang CE1, CE2 bewirkt Bypass-Betrieb, das Verbindung von der ersten bzw. zweiten optischen Empfangseinrichtung OR1, OR2 zur ersten bzw. zweiten optischen Sendeeinrichtung OT1, OT2 für den Fall, daß die jeweilige abgesetzte Station RT1...RT3 gestört ist.

Mit Hilfe dieser Schalteinrichtung LP werden die Informationsströme i und die Leitungsschleifen sowohl in der Vermittlungsanschlußeinrichtung COT als auch in den abgesetzten Stationen RT1...RT3 geschaltet bzw. gesteuert.

## Patentansprüche

1. Übertragungssystem als Zubringernetz in einem Kommunikationsnetz
- mit einer mit einer Vermittlungseinrichtung (EX) verbindbaren Vermittlungsanschlußeinrichtung (COT) und mehreren abgesetzten Stationen (RT1...RT3), die über zwei parallel angeordnete Leitungen (RL1, RL2) ringnetzförmig untereinander verbunden sind, wobei in der Vermittlungsanschlußeinrichtung (COT) eine ankommende Verbindung (RL1) im Sinne des Bildens eines gefalteten Ringnetzes (FRN) auf das abgehende Ende der weiteren Leitung (RL2) geführt ist,
- und mit in der Vermittlungsanschlußeinrichtung (COT) und in den abgesetzten Stationen (RT1...RT3) vorgesehenen leitungsbündelnden bzw. konzentrierenden Einrichtungen (MUX), derart ausgestaltet, daß die von der Vermittlungseinrichtung (EX) übermittelten zeitschlitzorientierten bzw. kanalgebündelten Nachrichten und Signalisierungsinformationen in einen seriellen Informationsstrom (i) und umgekehrt umgesetzt werden, wobei die Datenrate des Informationsstromes (i) an der Übertragungsgeschwindigkeit des gefalteten Ringnetzes (FRN) orientiert ist, und derart ausgestaltet, daß die übermittelten Informationen (i) in den abgesetzten Stationen (RT1...RT3) mit Hilfe der leitungsbündelnden bzw. konzentrierenden Einrichtungen (MUX) in Abhängigkeit von den übermittelten Signalisierungsinformationen in zeitschlitz- bzw. kanalorientierte Nachrichten (ki) und Signalisierungsinformationen und umgekehrt umgesetzt werden,
- und mit in jeder abgesetzten Station (RT1...RT3) angeordneten Sende- und Empfangseinrichtungen (OR, OT) im Sinne des Anschlusses an eine oder beide Leitungen (RL1, RL2), wobei bei Anschluß einer Leitung (RL1, RL2) die weitere Leitung (RL1, RL2) ohne Unterbrechung durch die jeweilige abgesetzte Station (R11, RL2) geführt wird,
- und mit in der Vermittlungsanschlußeinrichtung (COT) und in abgesetzten Stationen (RT1...RT3) angeordneten Steuereinrichtungen (ZS, ST) und Schaltmitteln (LB, LB1...B3), derart ausgestaltet, daß bei detektierten Störungen der Leitungen (RL1, RL2) oder Übertragungssystemkomponenten (OT, OR) aus den intakten Übertragungssystemteilen erneut ein gefaltetes Ringnetz (FRN) konfiguriert wird.

2. Übertragungssystem nach Anspruch 1,
wobei
die Leitungen (RL1, RL2) durch optische Leitungen (RL1, RL2) und die Sende- und Empfangseinrichtungen durch optische Sende- und Empfangseinrichtunge (OT, OR) realisiert sind.

3. Übertragungssystem nach Anspruch 1 oder 2,
wobei
in jeder abgesetzten Station (RT1...RT3) im Sinne einer beidseitigen Erkennung von Leitungs- und Übertragungskomponentenfehlern eine Fehlererkennungseinrichtung (N1, N2) und ein von einer Stationssteuerung gesteuertes Schaltmittel (LB1...LB3) vorgesehen ist, derart ausgestaltet
- daß bei gestörter abgesetzter Station (RT1...RT3) die optischen Leitungen (RL1, RL2) übermittlungskonform ohne Unterbrechung durchgeschaltet werden, oder
- daß nach einer detektierten Störung der optischen Leitung (RL1, RL2) oder der optischen Übertragungseinrichtungen (OR, OT) im Sinne des Bildens einer Informationsschleife der von der Vermittlungsanschlußeinrichtung (COT) übermittelte Informationsstrom (i) an die nicht übermittlungsrichtungskonforme, in Richtung Vermittlungsanschlußeinrichtung (COT) wirkende, optische Leitung gesteuert wird,
- und daß in der Vermittlungsanschlußeinrichtung (COT) die zentrale Steuereinrichtung (ZS) und ein Schaltmittel (LB) derart ausgestaltet ist, daß nach einem Erkennen einer durch ein Schaltmittel (LB1...LB3) gebildeten Informationsschleife der an der weiteren optischen Leitung (RL1, RL2) ankommende ge schleifte Informationsstrom (i) an die andere abgehende optische Leitung (RL1, RL2) gesteuert wird, und die abgesetzten Stationen im Sinne eines Vorhandenseins überprüft und die noch intakten Teile des gefalteten Ringnetzes (FRN) zu einem neuen gefalteten Ringnetz konfiguriert werden und das gefaltete, konfigurierte Ringnetz wieder in Betrieb genommen wird.

4. Übertragungssystem nach einem der Ansprüche 1 bis 3,
wobei
in eine Vermittlungsanschlußeinrichtung (COT) eine mit eingangsseitig zeitschlitzorientierten 2,048 MBit/s-Schnittstelleneinrichtungen (SEl...SEn) ausgestattete Multiplexeinrichtung (MUX), eine mit der Multiplexeinrichtung (MUX) verbundene Schalteinrichtung (LB) sowie zumindest eine mit dieser verbundenen, optische Sende- und zumindest eine optische Empfangseinrichtung (ORA, OTA, ORB, OTB) angeordnet ist.

5. Übertragungssystem nach einem der Ansprüche 1 bis 3,
wobei
in jeder abgesetzten Station (RT1...RT3) eine eingangsseitig kanalindividuelle Kanaleinrichtungen (Kl...Kn) aufweisende Multiplexeinrichtung (MUX) und eine mit dieser über jeweils eine Empfangs-, Daten-, Taktsynchronisationsleitung sowie eine fehleranzeigende Leitung (TX, RX, CX, FX) verbundene Schalteinrichtung (LB1...LB3) angeordnet ist, wobei die Schalteinrichtung (LB1...LB3) zumindest mit jeweils einer optischen Empfangs- und Sendeeinrichtung (OR, OT) in Verbindung steht.

6. Übertragungssystem nach einem der Ansprüche 1 bis 5,
wobei
in der Schalteinrichtung (LB) zwei Datenselektor/Multiplex/Schaltkreise (DM1, DM2) angeordnet sind, daß die Ausgänge der optischen Empfangseinrichtungen (OR) und die Eingänge der Sendeeinrichtungen (OT) sowie der Ausgang und der Eingang der Multiplexeinrichtung (MUX) derart mit Eingängen des Datenselektor/Multiplex-Schaltkreises(DM1, DM2) verbunden sind und durch an diesen angeordnete Steuereingänge (CE1, CE2) eine ankommende optische Leitung (RL1, RL2) mit der zugeordneten Multiplexeinrichtung (MUX) und die zur ankommenden optischen Leitung übermittlungsrichtungskonforme abgehende optische Leitung (RL1, RL2) mit der Multiplexeinrichtung (MUX) verbindbar ist, daß nach dem Erkennen eines Stationsfehlers jeweils die ankommende optische Leitung (RL1, RL2) übermittlungsrichtungskonform mit der abgehenden optischen Leitung (RL1, RL2) verbindbar ist und daß nach dem Erkennen eines Leitungs- oder Übertragungskomponentenfehlers die Multiplexeinrichtung (MUX) mit der anderen nicht übermittlungsrichtungskonformen optischen Leitung (RL1, RL2) verbindbar ist, wobei die Steuereingänge (CE1, CE2) an jeweils einen Ausgang eines Logik-Schaltkreises (N1, N2) geführt sind und an dessen Eingänge (El, En) die über entsprechende Verbindungen Stations- oder Leitungsfehler repräsentierende Spannungspotentiale gesteuert werden.

7. Übertragungseinrichtung nach Anspruch 4,
wobei
die Multiplexeinrichtung (MUX) der Vermittlungsanschlußeinrichtung (EX) derart ausgestaltet ist, daß zeitschlitzorientierte, kanalgebündelte Informationsströme (i) von 2 MBit/s zu einem Datenstrom bzw. Nachrichtenfluß von 18 MBit/s gemultiplext bzw. demultiplext werden.

8. Übertragungseinrichtung nach Anspruch 5,
wobei
die Multiplexeinrichtung (MUX1...MUX3) der abgesetzten Stationen (RT1...RT3) derart ausgestaltet ist, daß zeitschlitz- bzw. kanalorientierte Nachrichtenströme (i) von 64 KBit/s einschließlich der Signalisierungsinformationen zu einem Datenstrom bzw. Nachrichtenfluß von 18 MBit/s gemultiplext bzw. demultiplext werden.

9. Übertragungssystem nach Anspruch 5 oder 8,
wobei
eine Kanaleinrichtung (Kl...Kn) durch einen analogen Fernsprechanschluß mit nachgeschalteter PCM-Einrichtung oder einen digitalen Fernsprechanschluß mit zumindest einem Nachrichtenkanal von 64 Kbit/s realisiert ist.

10. Übertragungssystem nach Ansprüche 1 bis 4,
wobei
die Vermittlungsanschlußeinrichtung (COT) derart ausgestaltet ist, daß nach einem Erkennen einer durch eine abgesetzte Station (RT1...RT3) gebildeten Leitungsschleife mit Hilfe der zentralen Steuereinrichtung (ZS) sowie der Schalteinrichtung (LB) und der optischen Sende- und Empfangseinrichtungen (OR, OT) im Sinne einer Vorhandenseinsprüfung Meldungen (m) gebildet und an alle abgesetzten Stationen (RT1...RT3) übermittelt werden, daß entsprechend dem Empfang von in den abgesetzten Stationen (RT1...RT3) als Vorhandenseinsinformation gebildeten Quittierungsinformationen (qi) das gefaltete Ringnetz (FRN) durch Aussenden von zumindest einer Konfigurationsmeldung (ki), die in der abgesetzten Station (RT1...RT3) die Schalteinrichtungen (LB1...LB3) im Sinne eines Bildens einer Leitungschleife beeinflussen, ein konfiguriertes gefaltetes Ringnetz gebildet und in Betrieb genommen wird.

11. Übertragungssystem nach einem der vorhergehenden Ansprüche,
wobei
die abgesetzten Stationen (RT1...RT3) hinsichtlich des Empfangs und des Sendens der Information (i) mit Hilfe der Stationssteuereinrichtung (ST) und der Schalteinrichtung (LB1...LB3) abwechselnd in die erste und zweite Leitung (RL1, RL2) eingefügt sind.

## Claims

1. Transmission system as a feeder network in a communication network
- having a switching connection device (COT), which can be connected to a switching device (EX), and a plurality of remote stations (RT1...RT3), which are connected to one another in the form of a ring network via two lines (RL1, RL2) arranged in parallel, an incoming connection (RL1) being routed in the switching connection device (COT) to the outgoing end of the further line (RL2) in the sense of forming a folded ring network (FRN),
- and having line-grouping or concentration devices (MUX), provided in the switching connection device (COT) and in the remote stations (RT1...RT3) and designed in such a way that the time-slot-oriented or channel-grouped messages and signalling information transmitted by the switching device (EX) are converted into a serial information stream (i), and vice versa, the date rate of the information stream (i) being based on the transmission rate of the folded ring network (FRN), and designed in such a way that the transmitted information (i) is converted in the remote stations (RT1...RT3) with the aid of the line-grouping or concentrating devices (MUX) in dependence on the transmitted signalling information into time-slot-oriented or channel-oriented messages (ki) and signalling information, and vice versa,
- and having, arranged in each remote station (RT1...RT3), transmitting and receiving devices (OR, OT) for the purpose of connection to one or both lines (RL1, RL2), if one line (RL1, RL2) is connected the further line (RL1, RL2) being routed without interruption through the respective remote station (RT1, RT2),
- and having, arranged in the switching connection device (COT) and in remote stations (RT1...RT3), control devices (ZS, ST) and switching means (LB, LB1...B3), designed in such a way that, if faults of the lines (RL1, RL2) or transmission system components (OT, OR) are detected a folded ring network (FRN) is re-configured from the intact transmission system parts.

2. Transmission system according to Claim 1, the lines (RL1, RL2) being realized by optical lines (RL1, RL2) and the transmitting and receiving devices being realized by optical transmitting and receiving devices (OT, OR).

3. Transmission system according to Claim 1 or 2, there being provided in each remote station (RT1...RT3) for the purpose of detecting on both sides defects of line and transmission components a defect detection device (N1, N2) and a switching means (LB1...LB3), controlled by a station controller, designed in such a way
- that if the remote station (RT1...RT3) has a fault the optical lines (RL1, RL2) are connected through without interruption in a way conforming to the transmission, or
- that after a detected fault of the optical line (RL1, RL2) or of the optical transmission devices (OR, OT) the information stream (i) transmitted by the switching connection device (COT) is controlled to go to the optical line acting in the direction of the switching connection device (COT), as not conforming to the transmission direction, for the purpose of forming an information loop,
- and that in the switching connection device (COT) the central control device (ZS) and a switching means (LB) are designed in such a way that, after detecting an information loop formed by a switching means (LB1...LB3), the looped information stream (i) arriving at the further optical line (RL1, RL2) is controlled to go to the other outgoing optical line (RL1, RL2), and the remote stations are checked for the purpose of ascertaining presence and the still intact parts of the folded ring network (FRN) are configured to form a new folded ring network and the folded, configured ring network is put into operation again.

4. Transmission system according to one of Claims 1 to 3, there being arranged in a switching connection device (COT) a multiplex device (MUX), equipped on the input side with time-slot-oriented 2.048 Mbit/s interface devices (SE1...SEn), a switching device (LB), connected to the multiplex device (MUX), and also at least one optical transmitting device and at least one optical receiving device (ORA, OTA, ORB, OTB), connected to the said switching device.

5. Transmission system according to one of Claims 1 to 3, there being arranged in each remote station (RT1...RT3) a multiplex device (MUX), having on the input side channel-individual channel devices (K1...Kn), and a switching device (LB1...LB3), connected to the said multiplex device via in each case a receiving, data, clock-synchronization line and also a defect-indicating line (TX, RX, CX, FX), the switching device (LB1...LB3) being in connection at least with in each case an optical receiving and transmitting device (OR, OT).

6. Transmission system according to one of Claims i to 5, there being arranged in the switching device (LB) two data selector/multiplex/switching circuits (DM1, DM2), the outputs of the optical receiving devices (OR) and the inputs of the optical transmitting devices (OT) and also the output and the input of the multiplex device (MUX) being connected to inputs of the data selector/multiplex switching circuit (DM1, DM2) and it being possible by means of control inputs (CE1, CE2) arranged on the latter for an incoming optical line (RL1, RL2) to be connected to the assigned multiplex device (MUX) and for the outgoing optical line (RL1, RL2), conforming to the transmission direction with respect to the incoming optical line, to be connected to the multiplex device (MUX) in such a way that after a station defect is detected the incoming optical line (RL1, RL2) is in each case able to be connected to the outgoing optical line (RL1, RL2) in a way conforming to the transmission direction and that after detecting a line or transmission component defect the multiplex device (MUX) can be connected to the other optical line (RL1, RL2), not conforming to the transmission direction, the control inputs (CE1, CE2) being routed to in each case an output of a logic circuit (N1, N2) and the voltage potentials representing station or line defects being controlled at the inputs (E1, En) of the said circuit via corresponding connections.

7. Transmission system according to Claim 4, the multiplex device (MUX) of the switching connection device (EX) being designed in such a way that time-slot-oriented, channel-grouped information streams (i) of 2 Mbit/s are multiplexed to form a data stream or message flow of 18 Mbit/s, or demultiplexed.

8. Transmission system according to Claim 5, the multiplex device (MUX1...MUX3) of the remote stations (RT1...RT3) being designed in such a way that time-slot-oriented or channel-oriented message streams (i) of 64 Kbit/s, including the signalling information, are multiplexed to form a data stream or message flow of 18 Mbit/s, or demultiplexed.

9. Transmission system according to Claim 5 or 8, a channel device (K1...Kn) being realized by an analog telephone connection with downstream PCM device or a digital telephone connection with at least one message channel of 64 Kbit/s.

10. Transmission system according to Claims 1 to 4, the switching connection device (COT) being designed in such a way that after a line loop formed by a remote station (RT1...RT3) is detected the central control device (ZS) and the switching device (LB) and the optical transmitting and receiving devices (OR, OT) are used for the purpose of checking presence to form messages (m) and to send the messages to all the remote stations (RT1...RT3) and that, according to the reception of acknowledgement information (qi) formed in the remote stations (RT1...RT3) as presence information, there is sent at least one configuration message (ki), which in the remote station (RT1...RT3) influences the switching devices (LB1...LB3) for the purpose of forming a line loop, to form and put into operation a configured folded ring network.

11. Transmission system according to one of the preceding claims, the remote stations (RT1...RT3) being alternately inserted into the first and second lines (RL1, RL2) with the aid of the station control device (ST) and the switching device (LB1...LB3) with a view to receiving and transmitting the information (i).

## Revendications

1. Système de transmission servant de réseau d'arrivée dans un réseau de communication
- comportant un dispositif (COT) de raccordement à un central pouvant être relié à un central (EX) et plusieurs stations éloignées (RT1 à RT3), qui sont reliées entre elles par l'intermédiaire de deux lignes disposées en parallèle (RL1, RL2) en forme de réseau annulaire, une ligne (RL1) d'arrivée menant, dans le dispositif (COT) de raccordement au central, en vue de la formation d'un réseau annulaire plié (FRN) à l'extrémité de départ de l'autre ligne (RL2),
- comportant des dispositifs (MUX) prévus dans le dispositif (COT) de raccordement au central et dans les stations éloignées (RT1 à RT3), qui mettent en faisceau ou concentrent les lignes, et qui sont formés de telle sorte que les messages et informations de signalisation transmis par le central (EX) se trouvant dans des créneaux temporels ou mis en faisceau en canaux, soient converties en un flux (i) d'informations sérielles et inversement, le débit de données du flux (i) d'informations étant choisi en fonction de la vitesse de transmission du réseau annulaire plié (FRN) et les dispositifs (MUX) sont formés de telle sorte que les informations (i) transmises soient converties, dans les stations éloignées (RT1 à RT3), à l'aide des dispositifs (MUX) mettant en faisceau les lignes ou les concentrant, en fonction des informations de signalisation transmises en informations (ki) et informations de signalisation de créneaux temporels ou canaux et inversement,
- comportant des dispositifs (OR, OT) d'émission et de réception disposés dans chaque station éloignée (RT1 à RT3) en vue du raccordement à l'une ou aux deux lignes (RL1, RL2), l'autre ligne (RL1, RL2) passant sans interruption par la station éloignée considérée (RL1, RL2) en cas de raccordement d'une ligne (RL1, RL2),
- et comportant des dispositifs (ZS, ST) de commande et des moyens (LB, LB1 à LB3) de commutation, qui sont disposés dans le dispositif (COT) de raccordement au central et des stations éloignées (RT1 à RT3), qui sont formés de telle sorte que lorsque des perturbations des lignes (RL1, RL2) ou des composants (OT, OR) du système de transmission sont détectées, un réseau annulaire plié (FRN) soit de nouveau configuré à partir des parties intactes du système de transmission.

2. Système de transmission suivant la revendication 1, dans lequel les lignes (RL1, RL2) sont formées de lignes optiques (RL1, RL2) et les dispositifs d'émission et de réception sont formés de dispositifs (OT, OR) d'émission et de réception optiques.

3. Système de transmission suivant la revendication 1 ou 2, dans lequel
il est prévu dans chaque station éloignée (RT1 à RT3), en vue d'une reconnaissance des deux côtés d'erreurs de composant de lignes et de transmission un dispositif (N1, N2) de reconnaissance d'erreurs et un moyen (LB1 à LB3) de commutation commandé par une commande de stations, qui sont formés de telle sorte que
- lorsqu'une station éloignée (RT1 à RT3) est perturbée, on fait communiquer les lignes optiques (RL1, RL2) suivant la transmission sans interruption, ou
- on commande, après la détection d'une perturbation de la ligne optique (RL1, RL2) ou des dispositifs (OR, OT) de transmission optiques, en vue de la formation d'une boucle de transmission d'informations, le flux (i) d'informations transmis par le dispositif (COT) de raccordement au central à la ligne optique non conforme au sens de transmission et agissant en direction du dispositif (COT) de raccordement au central,
- le dispositif (ZS) de commande et un moyen (LB) de commutation sont formés dans le dispositif (COT) de raccordement au central, de telle sorte qu'après une reconnaissance d'une boucle de transmission d'informations formée par un moyen (LB1 à LB3 de commutation, le flux (i) d'informations bouclé arrivant à l'autre ligne optique (RL1, RL2) soit commandé à l'autre ligne (RL1, RL2) optique de départ et la présence des stations éloignées est contrôlée et les parties encore intactes du réseau annulaire plié (FRN) sont configurées en un nouveau réseau annulaire plié et le réseau annulaire plié configuré est remis en service.

4. Système de transmission suivant l'une des revendications 1 à 3, dans lequel il est prévu dans un dispositif (COT) de raccordement au central, un dispositif (MUX) de multiplexage équipé en entrée de dispositifs (SE1 à SEn) d'interface à 2,048 MBit/s ayant des créneaux temporels, un dispositif (LB) de commutation relié au dispositif (MUX) de multiplexage ainsi qu'au moins un dispositif d'émission optique et un dispositif de réception optique (ORA, OTA, ORB, OTB) relié à ce dispositif de commutation.

5. Système de transmission suivant l'une des revendications 1 à 3 dans lequel il est prévu, dans chaque station éloignée (RT1 à RT3), un dispositif (MUX) de multiplexage comportant en entrée des dispositifs (K1 à Kn) de canal propres à chaque canal et un dispositif (LB1 à LB3) de commutation relié à ce dispositif de multiplexage par l'intermédiaire d'une ligne de réception, de données et de synchronisation de cadence ainsi que d'une ligne (TX, RX, CX, FX) indiquant des erreurs, le dispositif (LB1 à LB3) de commutation étant en liaison avec au moins un dispositif (OR, OT) de réception et d'émission optique.

6. Système de transmission suivant l'une des revendications 1 à 5, dans lequel il est prévu dans le dispositif (LB) de commutation deux circuits (DM1, DM2) de sélection/multiplexage de données, les sorties des dispositifs (OR) optiques de réception et les entrées des dispositifs (OT) optiques d'émission ainsi que la sortie et l'entrée du dispositif (MUX) de multiplexage sont reliées à des entrées du circuit (DM1, DM2) de sélection/multiplexage de données et une ligne optique (RL1, RL2) d'arrivée peut être reliée au dispositif (MUX) de multiplexage associé par des entrées (CE1, CE2) de commande prévues sur ce circuit (DM1, DM2) et la ligne optique (RL1, RL2) partant vers la ligne optique d'arrivée suivant le sens de transmission peut être reliée au dispositif (MUX) de multiplexage, de telle sorte qu'après la reconnaissance d'une erreur de station, la ligne optique d'arrivée (RL1, RL2) puisse être reliée suivant le sens de transmission à la ligne optique de départ (RL1, RL2) et qu'après la reconnaissance d'une erreur de composant de ligne ou de transmission, le dispositif (MUX) de multiplexage puisse être relié à l'autre ligne (RL1, RL2) optique non conforme au sens de transmission, les entrées (CE1, CE2) de commande menant à une sortie d'un circuit logique (N1, N2) et les potentiels de tension représentant les erreurs de station des erreurs de ligne par l'intermédiaire de liaisons correspondantes sont commandés à ces entrées (E1, En).

7. Dispositif de transmission suivant la revendication 4,
dans lequel le dispositif (MUX) de multiplexage du dispositif (EX) de raccordement au central est formé de telle sorte que des flux (i) d'informations de créneaux temporels ou mis en faisceau en canaux de 2 MBit/s sont multiplexés ou démultiplexés en un flux de données ou flux d'informations de 18 MBit/s.

8. Dispositif de transmission suivant la revendication 5,
dans lequel le dispositif (MUX1 à MUX3) de multiplexage des stations éloignées (RT1 à RT3) est formé de telle sorte que des flux (i) d'informations de créneaux temporels ou de canaux de 64 KBit/s incluant les informations de signalisation sont multiplexés ou démultiplexés en un flux de données ou d'informations de 18 MBit/s.

9. Système de transmission suivant la revendication 5 ou 8,
dans lequel un dispositif (K1 à Kn) de canal est formé par un raccordement téléphonique analogique en aval duquel est branché un un dispositif MIC ou par un raccordement numérique téléphonique comportant au moins un canal d'informations de 64 KBit/s.

10. Système de transmission suivant les revendications 1 à 4,
dans lequel le dispositif (COT) de raccordement au central est formé de telle sorte qu'après la reconnaissance d'une boucle de lignes formée par une station éloignée (RT1 à RT3), des messages (m) soient formés, à l'aide du dispositif (ZS) central de commande ainsi que du dispositif (LB) de commutation et des dispositifs (OR, OR) optiques d'émission et de réception, en vue d'un contrôle de présence et qu'ils soient transmis à toutes les stations éloignées (RT1 à RT3), qu'en fonction de la réception d'informations (qi) d'accusé de réception formées dans les stations éloignées (RT1 à RT3) en tant qu'information de présence, le réseau annulaire plié (FRN) forme un réseau annulaire plié configuré par émission d'au moins un message (qi) de configuration qu'influencent, dans la station éloignée (RT1 à RT3), les dispositifs de commutation (LB1 à LB3) en vue d'une formation d'une boucle de lignes et de sorte qu'il soit mis en service.

11. Système de transmission suivant l'une des revendications précédentes,
dans lequel les stations éloignées (RT1 à RT3) sont insérées, du point de vue de la réception et de l'émission de l'information (i), à l'aide du dispositif (ST) de commande de station et du dispositif (LB1 à LB3) de commutation, en alternance dans les première et deuxième lignes (RL1, RL2).
